# EUROPÄISCHE PATENTSCHRIFT

(11) **EP 0 653 326 B1**
(45) Veröffentlichungstag und Bekanntmachung des Hinweises auf die Patenterteilung: **17.06.1998**
(21) Anmeldenummer: 94117560.6
(22) Anmeldetag: 08.11.1994
(51) Int. Cl.: B60P 3/12, B60P 3/14

(54) **Mehrzweck-Fahrzeug**
Multi-purpose vehicle
Véhicule polyvalent

(30) Priorität: 15.11.1993 DE 9317321 U
(43) Veröffentlichungstag der Anmeldung: 17.05.1995
(73) Patentinhaber: Rotzler GmbH + Co. Spezialfabrik für Seilwinden und Hebezeuge, 79585 Steinen (DE)
(72) Erfinder: Rotzler, Jürgen Dipl.Ing., 79585 Steinen (DE)
(74) Vertreter: Wasmuth, Rolf, Dipl.-Ing.

(56) Entgegenhaltungen:
- EP-A- 0 153 187
- EP-A- 0 229 964
- DE-A- 2 805 783
- DE-A- 3 915 501
- DE-U- 1 743 110
- GB-A- 2 061 193
- GB-A- 2 213 109

## Beschreibung

Die Erfindung betrifft ein Mehrzweck-Fahrzeug mit einem von einer Antriebseinheit betriebenen Arbeitsgerät nach dem Oberbegriff des Anspruchs 1.

Aus der DE-A 28 05 783 ist ein Mehrzweck-Fahrzeug bekannt, das aus einem Einsatzfahrzeug für die technischen Dienste im Bereich des Zivil- bzw. des Katastrophenschutzes und einem Geräteträger für die Aufnahme von Werkzeugen, Aggregaten oder dergleichen besteht. Die Ladefläche des Fahrzeuges bildet einen plattenförmigen Systemrahmen, auf dem ein Befestigungsrahmen etwa mittig zur Längsachse des Fahrzeuges angeordnet ist. Der Befestigungsrahmen weist zwei seitliche Andockebenen auf, an die mit Hilfe von Kupplungsteilen mobile Geräteträger ankoppelbar sind. Die Geräteträger können je nach Einsatzzweck mit unterschiedlichem Werkzeug bzw. Aggregaten bestückt werden.

Bei dieser bekannten Ausführung sind die Geräteträger an einem Punkt auf dem Systemrahmen zur Fixierung während des Transports gesichert. Die Geräteträger dienen zum Lagern bzw. zum Transport von Werkzeugen und/oder Aggregaten.

Aus der DE 39 15 501 A1 ist bekannt, eine transportable Baueinheit mit einer Seilwinde zum Ziehen einer Last auszustatten, wobei die Seilwinde von einem auf der Baueinheit montierten Verbrennungsmotor betrieben ist. Die Baueinheit ist auf einer fahrbaren Tragplatte angeordnet und kann entweder durch Muskelkraft oder von einer Zugmaschine an den Einsatzort transportiert werden. Derartige Baueinheiten finden beispielsweise im militärischen Bereich Verwendung oder werden von technischen Hilfswerken oder Feuerwehren im Katastrophenfall eingesetzt und dienen im wesentlichen als Bergehilfe. Wartungs- und Reparaturarbeiten erfordern meist eine vollständige Demontage von Verbrennungsmotor und Seilwinde. Weitere Werkzeuge und Arbeitsgeräte wie beispielsweise Blechschneider müssen zusätzlich an den Einsatzort gebracht werden, was einen hohen Aufwand an Material und Logistik zur Folge hat.

Der Erfindung liegt die Aufgabe zugrunde, ein MehrzweckFahrzeug zu schaffen, das mit geringem Montage- bzw. Demontageaufwand an unterschiedlichste Arbeitseinsätze, insbesondere Katastropheneinsätze, umrüstbar ist, wobei auch schweres Arbeitsgerät einsetzbar sein soll.

Diese Aufgabe wird bei einem Mehrzweck-Fahrzeug nach dem Gattungsbegriff erfindungsgemäß mit den Merkmalen des Anspruchs 1 gelöst.

Die auf dem Mehrzweck-Fahrzeug mitgeführten Bauarbeitsgeräte bzw. Baueinheiten sind sicher in das Raster eingesetzt und auswechselbar montiert, wodurch die Stabilität der Baueinheiten auf dem Systemrahmen erhöht ist. Die Baueinheiten können leicht und übersichtlich montiert und demontiert werden.

Die Verwendung eines auf dem Mehrzweck-Fahrzeug angeordneten Systemrahmens mit Rasterung zur Aufnahme austauschbarer Arbeitsgeräte ermöglicht es, je nach Bedarf unterschiedliches Werkzeug und Geräte auf dem Mehrzweck-Fahrzeug zu montieren und mit nur einem einzigen, ebenfalls austauschbaren Verbrennungsmotor zu betreiben. Die Trennung von Antriebseinheit und Arbeitsgerät erlaubt eine flexible und schnelle Anpassung an den jeweiligen Einsatzzweck und erleichtert die Instandhaltung.

Das Raster auf dem Systemrahmen ist zweckmäßig in Form von Vertiefungen ausgebildet, wodurch ein besonders fester Halt der Arbeitsgeräte auf dem Systemrahmen gegeben ist und hohe Tangentialkräfte quer zur Oberfläche des Systemrahmens übertragen werden können. Dieser Vorteil kommt insbesondere beim Mitführen einer Seilwinde zum Tragen, deren Seil etwa parallel zur Längsachse des Systemrahmens geführt ist und die hohe Zugkräfte aufbringt.

Weitere Merkmale der Erfindung ergeben sich aus den weiteren Ansprüchen, der Beschreibung und den Zeichnungen, in denen ein im folgenden beschriebenes Ausführungsbeispiel der Erfindung dargestellt ist. Es zeigen:
- Fig. 1: eine perspektivische Ansicht des erfindungsgemäßen Mehrzweck-Fahrzeuges,

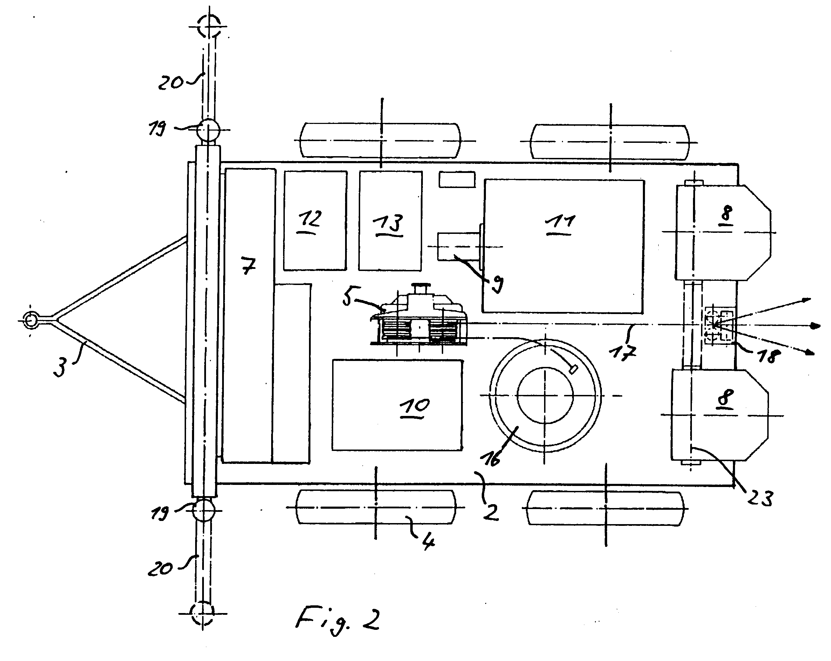

- Fig. 2: eine Draufsicht und

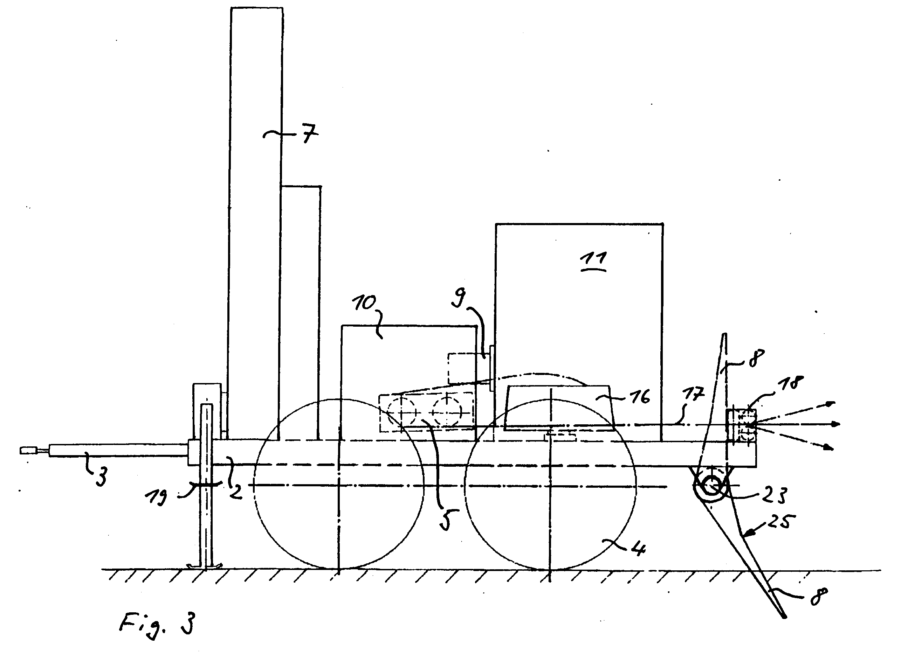

- Fig. 3: eine Seitenansicht des Mehrzweck-Fahrzeuges.

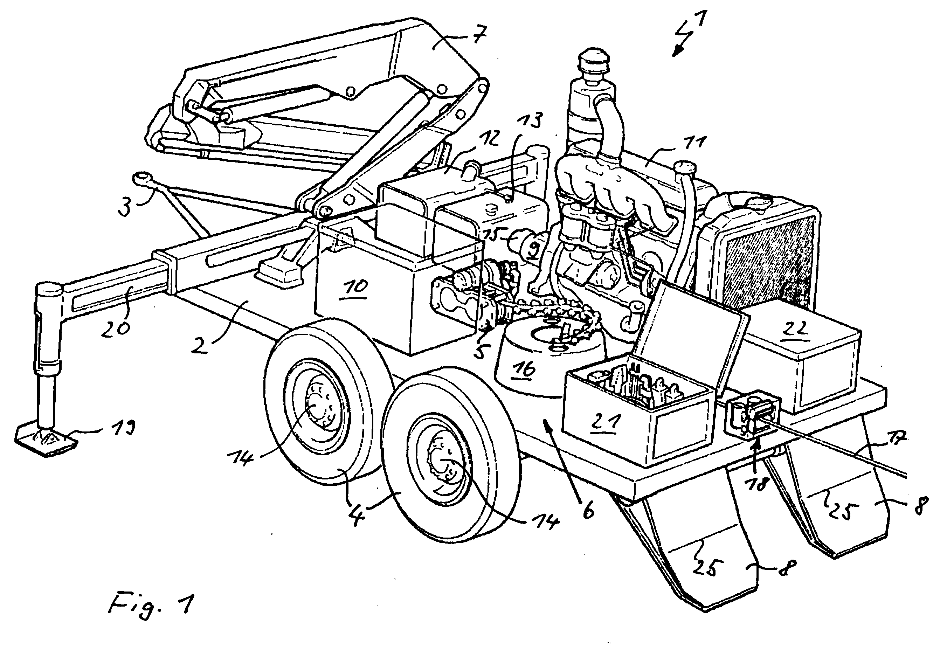

In Fig. 1 ist ein erfindungsgemäßes Mehrzweck-Fahrzeug 1 mit mehreren unterschiedlichen Arbeitsgeräten und einem Verbrennungsmotor 11 dargestellt. Das Mehrzweck-Fahrzeug besteht aus einem Systemrahmen 2, der auf dem Fahrzeuggestell aufsitzt und verbunden ist oder mit diesem ein einstückiges Bauteil bildet. Der Systemrahmen 2 hat die Form einer rechteckigen Platte, an deren Längsseite zwei Räderpaare 4 mit unter dem Systemrahmen 2 verlaufenden Radachsen 14 angeordnet sind. Die in Fahrtrichtung vorne liegende Radachse ist etwa unterhalb der mittigen Querachse des Systemrahmens 2 angeordnet; das Räderpaar selbst liegt asymmetrisch zur mittleren Querachse. Die Räder haben vorteilhaft einen großen Durchmesser, um dem Mehrzweck-Fahrzeug eine große Bodenfreiheit und eine gute Geländegängigkeit zu erlauben. Das Mehrzweck-Fahrzeug ist im gezeigten Beispiel als Anhänger ausgeführt, der über eine verschwenkbare Deichsel 3 von einer hier nicht dargestellten Zugmaschine, beispielsweise einem Lkw, gezogen werden kann. Die Verschwenkachse der Deichsel 3 liegt parallel zur Querachse des Systemrahmens 2, so daß der Aufnahmekopf der Deichsel zum Aufsetzen auf einen Kupplungskopf leicht nach oben verschwenkt werden kann. Es kann aber auch vorteilhaft sein, die Deichsel 3 starr mit dem Systemrahmen 2 zu verbinden und zum Ankuppeln den gesamten vorderen Bereich von Deichsel und Systemrahmen anzuheben. Durch die asymmetrische Anordnung des Räderpaares wirkt ein Kippmoment um die vordere Radachse nach unten, welches die angekuppelte Deichsel 3 sicher auf dem Kupplungskopf hält.

Auf dem Systemrahmen 2 sind eine Mehrzahl von Arbeitsgeräten von oben zugänglich angeordnet und können je nach Einsatzzweck leicht montiert bzw. abgenommen werden. Der Verbrennungsmotor 11, der vorteilhaft als Dieselmotor mit einer Leistung von ca. 30 kW bis ca. 100 kW ausgebildet ist, ist in der Art und Weise an einer Längsseite des Systemrahmens 2 angeordnet, daß seine Kurbelwelle parallel zur Längsachse des Systemrahmens verläuft. Der Verbrennungsmotor dient als Antriebseinheit für einen hier nicht dargestellten Generator und/oder für eine Hydraulikpumpe 9. Die getrennte Anordnung von Verbrennungsmotor und Arbeitsgeräten erlaubt es, je nach Anzahl und Größe der zu betreibenden Arbeitsgeräte Verbrennungsmotoren unterschiedlicher Leistung auf dem Systemrahmen anzuordnen.

In Fahrtrichtung vor dem Verbrennungsmotor und daran angeschlossener Hydraulikpumpe 9 liegen ein Behälter 13 für Hydrauliköl, der über eine Zufuhrleitung die Hydraulikpumpe 9 mit Öl speist, sowie ein Kraftstoffbehälter 12.

Insbesondere für Bergearbeiten kann eine Seilwinde 5 vorgesehen sein, die etwa in der Mitte des Systemrahmens 2 in der Längsachse des Mehrzweckfahrzeuges liegt. Das Zugseil 17 der Seilwinde 5 ist über eine Führungsvorrichtung 18 einer Seiltrommel zugeführt, wobei das ablaufende Seil in einer Vorratstrommel 16 gespeichert wird. Es kann aber auch vorteilhaft sein, Seilwinde und Seiltrommel als einteiliges Bauteil auszuführen. Die Führungsvorrichtung 18 ist an der hinteren Schmalseite des Systemrahmens mittig angeordnet, wodurch das Seil etwa parallel bzw. in der Längsachse des Systemrahmens 2 geführt ist. Die Seilwinde weist eine Zugkraft von ca. 50 kN bis ca. 100 kN auf. Das Zugseil 17 hat vorteilhaft eine Länge von ca. 50 m bis ca. 300 m und kann nach dem Durchtritt durch die Führungsvorrichtung 18 um etwa 25° gegenüber der Längsachse des Fahrzeuges verdreht sein, so daß das Zugseil einen kegelförmigen Einsatzraum abdeckt.

Zur Aufnahme von Werkzeugen und Arbeitsgeräten sind Aufnahmebehälter 10, 21 und 22 vorgesehen, die je nach Größe der aufzunehmenden Werkzeuge und Geräte unterschiedlich groß dimensioniert sind und, um eine gleichmäßige Gewichtsverteilung auf dem Systemrahmen zu erreichen, insbesondere dem Verbrennungsmotor 11 gegenüberliegend angeordnet sind. Beispielsweise dient der Aufnahmebehälter 10 zum Verstauen von hydraulisch betriebenen Werkzeugen, insbesondere Wasserpumpen, aber auch Spreizer, Scheren, Zangen u.ä. Die hydraulisch betriebenen Werkzeuge sind mittels eines auf einer Schlauchtrommel auf- und abwickelbaren Hydraulikschlauches, der ebenfalls in einem der Aufnahmebehälter verstaut sein kann, an dem Hydrauliksystem, angetrieben durch die Hydraulikpumpe 9, anzuschließen. Der Hydraulikschlauch weist vorzugsweise eine Länge von ca. 20 m bis ca. 50 m auf, um einen großen Aktionsradius der Hydraulikwerkzeuge zu ermöglichen. Um den gleichzeitigen Betrieb mehrerer Hydraulikwerkzeuge möglich zu machen, kann es angezeigt sein, weitere Schlauchtrommeln mit Hydraulikschläuchen in einem der Aufnahmebehälter oder direkt auf dem Systemrahmen 2 angeordnet mitzuführen.

Auch der Einsatz elektrisch betriebener Werkzeuge ist möglich, die ebenfalls in einem der Aufnahmebehälter untergebracht sind und ihren Strom von dem nicht dargestellten, vom Verbrennungsmotor 11 betriebenen Generator beziehen, der vorteilhaft eine elektrische Leistung von ca. 3 kVA bis ca. 20 kVA entwickelt.

Im Bereich der vorderen Schmalseite ist ein Verladekran 7 montiert, der vorzugsweise für die Aufnahme eines Lastmomentes von ca. 20 000 Nm bis 60 000 Nm dimensioniert ist. Der Verladekran 7 ist vorteilhaft von der Hydraulikpumpe hydraulisch betrieben. Der Verladekran kann mehrgliedrig aufgebaut sein und volle räumliche Bewegungsfreiheit haben. Die vom Verladekran 7 und der aufgenommenen Last ausgeübte Gewichtskraft wird gegenüber dem Boden von zwei ausfahrbaren Stützen 19 abgestützt, die vorteilhaft im Bereich der vorderen Schmalseite links und rechts des Systemrahmens angebracht sind. Die Stützen 19 können über Teleskoparme 20 seitlich und nach unten ausgefahren werden, um ein Kippen des Mehrzweck-Fahrzeuges um seine Längsachse auch bei hohen, vom Verladekran 7 aufgenommenen und seitlich verschwenkten Lasten sicher zu verhindern und um individuell durch Bodenunebenheiten bzw. Schrägstellung am Hang bedingte Höhenunterschiede zwischen linker und rechter Stütze 19 auszugleichen.

Im Bereich der hinteren Schmalseite des Mehrzweckfahrzeuges 1 sind symmetrisch zur Längsachse zwei Erdspaten 8 angeordnet, die vorteilhaft um eine gemeinsame, parallel zur Querachse liegende Drehachse 23 verschwenkbar sind. Die Erdspaten 8 können entweder von Hand ausgefahren werden oder hydraulisch betrieben sein. Sie stützen das Mehrzweck-Fahrzeug 1 beim Betrieb der Seilwinde 5 gegen die vom Zugseil 17 gezogene Last ab, indem sie während des Einsatzes nach unten ausgeklappt werden und sich insbesondere im freien Gelände in den losen Untergrund graben. Die vorzugsweise metallenen Erdspaten sind etwa V-förmig ausgebildet und sind im Endbereich der sich öffnenden V-Seiten etwa halbkreisförmig geschlossen, wobei das spitze Ende im ausgeklappten Zustand sich in den Boden gräbt und durch den entgegengesetzten, V-förmig geöffneten Bereich die Drehachse 23 verläuft. Die Erdspaten können bis etwa 90°, vorzugsweise 60°, gegenüber der Horizontalen nach unten verschwenkt werden. Im eingeklappten Zustand sind die Erdspaten dagegen um ca. 90° gegenüber der Horizontalen nach oben verschwenkt. Die Erdspaten weisen auf derjenigen Schaufelseite, welche im eingeklappten Zustand dem Systemrahmen zugewandt ist, eine Knickstelle 25 auf, die etwa parallel zur Drehachse 23 verläuft. Oberhalb der Knickstelle 25, in Richtung der V-Öffnung, sind die beiden V-Seiten stärker auseinander gebogen als im unteren Bereich, der in das Erdreich eindringen kann. Die Drehachse 23 der Erdspaten 8 ist auf der Unterseite des Systemrahmens 2 angebracht; um die Erdspaten in ihre vertikale Position nach oben klappen zu können, muß die Drehachse 23 direkt an der hinteren Sichtkante des Systemrahmens 2 angeordnet sein. Es kann aber auch vorteilhaft sein, im hinteren Bereich des Systemrahmens Aussparungen vorzusehen, in die die Erdspaten hochgeklappt werden können.

Der Systemrahmen 2 weist einen Raster auf, in dessen Vertiefungen vorteilhaft die Arbeitsgeräte, Behälter und Maschinen sicher eingesetzt und gehalten sind. Neben der erhöhten Stabilität ist damit auch ein leichteres und übersichtlicheres Montieren und Demontieren ermöglicht.

Um auch in schlammigem Gelände volle Bewegungsfreiheit zu haben, können anstelle der Räder auch Kufen am Systemrahmen montiert werden. Es kann auch vorteilhaft sein, den gesamten Systemrahmen einschließlich aller Aufbauten ohne Räder oder Kufen beispielsweise auf der Ladefläche eines Nutzfahrzeuges anzubringen.

## Patentansprüche

1. Mehrzweck-Fahrzeug mit einem von einer Antriebseinheit betriebenen Arbeitsgerät, das auswechselbar auf einem plattenförmigen Systemrahmen (2) des Mehrzweck-Fahrzeugs (1) angeordnet ist,
dadurch gekennzeichnet, daß als Antriebseinheit ein Verbrennungsmotor (11) vorgesehen ist, der auf dem Systemrahmen (2) mitgeführt ist, wobei der Verbrennungsmotor (11) und das Arbeitsgerät (6) getrennt ausgeführte Baueinheiten bilden, welche in einem Raster des Systemrahmens (2) sicher eingesetzt und auswechselbar montiert sind, wobei das Raster auf dem Systemrahmen (2) in Form von Vertiefungen ausgebildet ist.

2. Mehrzweck-Fahrzeug nach Anspruch 1,
dadurch gekennzeichnet, daß das Arbeitsgerät (6) eine Seilwinde (5) ist.

3. Mehrzweck-Fahrzeug nach Anspruch 2,
dadurch gekennzeichnet, daß ein von der Seilwinde (5) angetriebenes Zugseil (17) mittig auf dem Systemrahmen (2) parallel zur Fahrzeuglängsachse geführt ist.

4. Mehrzweck-Fahrzeug nach Anspruch 3,
dadurch gekennzeichnet, daß an der hinteren Schmalseite des Systemrahmens (2) eine mittig angeordnete Führungsvorrichtung (18) vorgesehen ist, durch die das Zugseil (17) geführt ist.

5. Mehrzweck-Fahrzeug nach einem der Ansprüche 1 bis 4,
dadurch gekennzeichnet, daß im Bereich der hinteren Schmalseite vorzugsweise zwei nach unten verschwenkbare Erdspaten (8) angeordnet sind.

6. Mehrzweck-Fahrzeug nach Anspruch 5,
dadurch gekennzeichnet, daß die Erdspaten (8) um eine gemeinsame Drehachse (23) vorzugsweise um etwa 60° gegenüber der Horizontalen nach unten verschwenkbar sind.

7. Mehrzweck-Fahrzeug nach Anspruch 5 oder 6,
dadurch gekennzeichnet, daß die Erdspaten (8) V-förmig ausgebildet und oberhalb einer Knickstelle (25) in dem der Drehachse (23) benachbarten Bereich stärker auseinander gebogen sind als in dem dem Erdreich zugewandten Bereich.

8. Mehrzweck-Fahrzeug nach einem der Ansprüche 1 bis 7,
dadurch gekennzeichnet, daß ein oder mehrere weitere Arbeitsgeräte (6) auswechselbar auf dem Systemrahmen (2) montiert sind, beispielsweise ein Generator, ein Verladekran (7), eine Hydraulikpumpe (9), eine Schlauchtrommel mit einem Hydraulikschlauch, eine Wasserpumpe und ein Werkzeugbehälter (10, 21, 22).

9. Mehrzweck-Fahrzeug nach einem der Ansprüche 1 bis 8,
dadurch gekennzeichnet, daß links und rechts am Systemrahmen (2) zwei Stützen (19) ausfahrbar sind.

## Claims

1. Multi-purpose vehicle with an implement operated by a drive unit, which implement is exchangeably located on a platform-like system frame (2) of the multi-purpose vehicle (1), characterised in that an internal combustion engine (11) is provided as the drive unit, which engine is carried along on the system frame (2), the internal combustion engine (11) and the implement (6) forming components of separate construction, which are securely inserted and exchangeably mounted in a grid of the system frame (2), the grid on the system frame (2) being constructed in the form of recesses.

2. Multi-purpose vehicle according to Claim 1, characterised in that the implement (6) is a cable winch (5).

3. Multi-purpose vehicle according to Claim 2, characterised in that a traction cable (17) driven by the cable winch (5) is guided centrally on the system frame (2) parallel to the longitudinal axis of the vehicle.

4. Multi-purpose vehicle according to Claim 3, characterised in that provided on the rear narrow side of the system frame (2) is a centrally located guide device (18), through which the traction cable (17) is guided.

5. Multi-purpose vehicle according to one of Claims 1 to 4, characterised in that preferably two downwardly tiltable earth spades (8) are located in the region of the rear narrow side.

6. Multi-purpose vehicle according to Claim 5, characterised in that the earth spades (8) are able to tilt downwards about a common axis of rotation (23) preferably through approximately 60° with respect to the horizontal.

7. Multi-purpose vehicle according to Claim 5 or 6, characterised in that the earth spades (8) have a V-shaped construction and above a kink (25) in the region adjacent to the axis of rotation (23) are bent further apart than in the region facing the earth.

8. Multi-purpose vehicle according to one of Claims 1 to 7, characterised in that one or more further implements (6) are exchangeably mounted on the system frame (2), for example a generator, a loading crane (7), a hydraulic pump (9), a hose reel with a hydraulic hose, a water pump and a tool container (10, 21, 22).

9. Multi-purpose vehicle according to one of Claims 1 to 8, characterised in that two props (19) can be extended on the left and right of the system frame (2).

## Revendications

1. Véhicule polyvalent comportant un appareil de travail qui est actionné par un dispositif moteur et placé de manière interchangeable sur un bâti système en forme de plaque (2) du véhicule polyvalent (1), caractérisé par le fait que comme dispositif moteur est prévu un moteur à combustion interne (11) qui est transporté sur le bâti système (2), ce moteur (11) et l'appareil de travail (6) formant des entités réalisées séparément qui sont placées et montées de manière interchangeable de façon sûre dans une grille du bâti système (2), cette grille étant faite sur le bâti système (2) sous forme de creux.

2. Véhicule polyvalent selon la revendication 1, caractérisé par le fait que l'appareil de travail (6) est un treuil (5).

3. Véhicule polyvalent selon la revendication 2, caractérisé par le fait qu'un câble de traction (17) entraîné par le treuil (5) passe au milieu sur le bâti système (2) parallèlement à l'axe longitudinal du véhicule.

4. Véhicule polyvalent selon la revendication 2, caractérisé par le fait que sur le petit côté arrière du bâti système (2) est prévu un dispositif de guidage (18) placé au milieu par lequel passe le câble de traction (17).

5. Véhicule polyvalent selon l'une des revendications 1 à 4, caractérisé par le fait que dans la zone du petit côté arrière sont placées de préférence deux bêches (8) pouvant basculer vers le bas.

6. Véhicule polyvalent selon la revendication 5, caractérisé par le fait que les bêches (8) peuvent basculer vers le bas autour d'un axe commun (23) de préférence d'environ 60° par rapport à l'horizontale.

7. Véhicule polyvalent selon l'une des revendications 5 et 6, caractérisé par le fait que les bêches (8) sont en forme de V et le V est plus ouvert au-dessus d'un coude (25) dans leur partie voisine de l'axe de basculement (23) que dans leur partie dirigée vers le sol.

8. Véhicule polyvalent selon l'une des revendications 1 à 7, caractérisé par le fait qu'un ou plusieurs autres appareils de travail (6) sont montés de manière interchangeable sur le bâti système (2), par exemple une génératrice, une grue de chargement (7), une pompe hydraulique (9), un tambour portant un flexible hydraulique, une pompe à eau et un récipient à outils (10, 21, 22).

9. Véhicule polyvalent selon l'une des revendications 1 à 8, caractérisé par le fait que deux béquilles (19) peuvent être sorties à gauche et à droite sur le bâti système (2).
